# EUROPEAN PATENT APPLICATION

(11) **EP 4 845 144 A1**
(43) Date of publication of application: **25.11.2026**
(21) Application number: 25178580.4
(22) Date of filing: 23.05.2025
(51) Int. Cl.: H04N 7/18, G06F 16/783, G06V 20/40, H04N 19/00

(54) **GENERATING A CONDENSED VIDEO FROM ONE OR MORE ENCODED VIDEO SEQUENCES**

(71) Applicant: Axis AB, 223 69 Lund (SE)
(72) Inventor: Keskikangas, Axel, 223 69 LUND (SE); Yuan, Song, 223 69 LUND (SE)
(74) Representative: AWA Sweden AB

(57) **Abstract**

The present disclosure relates to methods and devices for generating a condensed video from one or more encoded video sequences using techniques that enable processing-efficient generation of the condensed videos without decoding of the encoded video sequences, but instead by operating directly on the encoded video data using associated metadata that identifies regions of interest and object tracks.

## Description

### Technical Field

The present disclosure relates to video processing, and in particular to generating a condensed video from one or more encoded video sequences.

### Background

Video surveillance and video monitoring systems often generate vast quantities of video data, particularly in public safety, security, and industrial applications. Reviewing such extensive footage to identify key events or anomalies is both time-consuming and resource intensive. To alleviate this, condensed videos, also referred to as synopsis videos or summary videos, have been introduced as a means of efficiently conveying relevant activity over long periods of time. These condensed videos typically aim to present an overview of important or interesting events that occurred over hours or even days of video in a much shorter playback duration.

A common feature of condensed videos is their ability to present multiple events simultaneously, even though the original events occurred at different times. By doing so, these condensed videos provide viewers with a compact and information-rich visual representation, facilitating faster and more intuitive understanding of the content.

Methods for generating such condensed videos are known in the art. Conventional approaches often involve fully decoding the original encoded video, performing video processing on the decoded frames to extract and organize key events, generating a new video composition which presents multiple events from the original encoded video simultaneously, and, if desired, re-encoding the final condensed video for storage or transmission. While these methods may be effective in achieving a visual synopsis, they can be computationally expensive and resource intensive.

There is thus a need for improvements in this context.

### Summary

**In** view of the above, solving or at least reducing one or several of the drawbacks discussed above would be beneficial, as set forth in the attached independent patent claims.

According to a first aspect of the present disclosure, there is provided a method generating a condensed video, the method comprising: obtaining an encoded video sequence comprising encoded image frames; obtaining metadata associated with the encoded video sequence, the metadata indicating one or more series of regions across the encoded image frames, each region being associated with a respective encoded image frame of the encoded image frames and corresponding to a detected object in the associated encoded image, and each series corresponding to an object track of a detected object in the encoded video sequence; determining an intra encoded frame of the condensed video; determining a first inter encoded frame of the condensed video, the first inter encoded frame being encoded with reference to the intra encoded frame

The determining of the first inter encoded frame comprises: for a first region in a first series of regions, identifying a first set of one or more encoding blocks from the encoded image frame associated with the first region, wherein each identified encoding block in the first set is located within the first region and can be decoded using the intra encoded frame or can be decoded without referencing any other coding blocks, and copying the identified first set of encoding blocks from the encoded image frame associated with the first region into the first inter encoded frame.

The method further comprises determining a second inter encoded frame of the condensed video, the second inter encoded frame being encoded with reference to the first inter encoded frame, the determining comprises: for a second region subsequent to the first region in the first series of regions, identifying a second set of one or more encoding blocks from the encoded image frame associated with the second region, wherein each identified encoding block in the second set is located within the second region and that can be decoded using the first set of encoding blocks or can be decoded without referencing any other coding blocks, and copying the identified second set of encoding blocks from the encoded image frame associated with the second region into the second inter encoded frame.

In the context of the present disclosure, "metadata" refers to auxiliary information associated with the encoded video sequence that indicates spatial regions corresponding to detected objects within the encoded image frames. The metadata defines one or more series of regions across multiple frames, where each series corresponds to an object track and each region within a series identifies the location of the object in a specific frame. This may include, for example, bounding box coordinates, frame indices, and object identifiers that associate regions across frames to the same object.

In the context of the present disclosure, an "encoding block" refers to a unit of encoded video data corresponding to a spatial portion of an image frame, as defined by the video compression standard used (e.g., macroblocks in H.264, coding tree units in HEVC, or superblocks in AV1). Each encoding block contains data that represents pixel values either independently (intra-coded) or by reference to other blocks (inter-coded), and serves as a basic unit for compression, motion estimation, and prediction.

Advantageously, there is provided a method for generating a condensed (synopsis) video in a manner that is more bitrate-efficient and processing-efficient compared to traditional approaches. Unlike prior art methods that require full decoding of the original video, pixel-domain processing, and subsequent re-encoding of synthesized frames, the proposed approach avoids these computationally expensive steps by operating directly on the encoded video data. In particular, the method leverages metadata that identifies regions of interest (ROIs) corresponding to object tracks across encoded image frames. Rather than decoding these ROIs, the techniques presented in this disclosure involve analysing the encoding structure, including motion vectors and intra-coded block information, to verify which regions can be reused directly. If it is determined, based on this encoding information, that a region can be decoded either from intra data or from predictive data already present in a previously defined synthetic inter frame of the condensed video, the corresponding encoded blocks are directly copied into a new synthetic inter frame. This reuse of encoded data across synthetic frames eliminates unnecessary decoding and re-encoding operations, enabling efficient generation of the condensed video with reduced computational overhead.

**In** some examples, determining an intra encoded frame comprises obtaining an intra encoded frame from the encoded video sequence for which the metadata does not indicate any region corresponding to a detected object.

Advantageously, this allows the selected intra frame to serve as a clean background or template frame for the condensed video, free from overlapping objects or motion-related content. Using such an object-free I-frame may provide a visually neutral "backdrop" onto which regions of interest from other time points can be composited. Additionally, reusing an existing I-frame from the original video eliminates the need to encode a new intra frame, thereby reducing processing complexity and contributing to overall bitrate efficiency.

In some examples, determining an intra encoded frame comprises obtaining a predetermined intra encoded frame as the intra encoded frame.

Advantageously, this allows for consistent and predictable generation of condensed videos, as the same reference frame can be reused across multiple instances or devices. Moreover, the predetermined intra frame can be labelled or designated according to the application context, for example, as a default background frame, or a scene-specific reference.

In some examples, copying the first set of encoding blocks into the first encoded image frame comprises placing each encoding block of the first set of encoding blocks at a spatial position in the first inter encoded frame corresponding to a spatial position of the encoding block in the encoded image associated with the first region; and copying the second set of encoding blocks into the second encoded image frame comprises placing each encoding block of the second set of encoding blocks at a spatial position in the second inter encoded frame corresponding to a spatial position of the encoding block in the encoded image associated with the second region.

Advantageously, this approach preserves the spatial alignment of visual content between the original encoded video and the condensed video, allowing regions of interest to retain their original spatial positioning within the synthetic frame of the condensed video. By maintaining this one-to-one spatial correspondence, the condensed video may preserve the geometric and contextual relationships of objects within the scene as presented in the original video stream, even when those objects originate from different points in time. Such spatial consistency may enhance scene interpretability of the condensed video for both human operators and automated analysis systems, as object movements, interactions, and trajectories remain visually coherent.

In some examples, the metadata further comprises, for each region, position data indicating a real world position of the detected object in the associated encoded image; copying the first set of encoding blocks into the first encoded image frame comprises placing each encoding block of the first set of encoding blocks at a spatial position in the first inter encoded frame determined from a spatial position of the encoding block in the encoded image associated with the first region and from the position data of the first region; and copying the second set of encoding blocks into the second encoded image frame comprises placing each encoding block of the second set of encoding blocks at a spatial position in the second inter encoded frame determined from a spatial position of the encoding block in the encoded image associated with the second region and from the position data of the first region.

Advantageously, these examples may enable accurate spatial placement of regions of interest even in scenarios where the camera capturing the original video of the encoded video sequence is moving, such as when using pan-tilt-zoom (PTZ) cameras. By incorporating real-world position data, the method compensates for camera motion and scene shifts, ensuring that objects are composited in spatially meaningful locations in the condensed video regardless of viewpoint changes in the source video.

In some examples, the steps of the method are performed for a plurality of encoded video sequences, each encoded video sequence obtained from a respective camera, wherein each camera is associated with a real world position, wherein the position data of each region as defined in the metadata associated with each encoded video sequences is relative to the real world position of the camera from which the encoded video sequence is obtained.

This embodiment extends the method to operate across multiple encoded video sequences obtained from a plurality of cameras, where each camera is associated with a known real-world position (e.g., GPS position). The position data for each region in the metadata may then be derived relative to the physical location of the camera that captured the corresponding video sequence. This allows the condensed video to spatially align objects from different cameras based on their positions in the real world.

Advantageously, this enables the generation of a multi-source condensed video where regions of interest from multiple cameras can be integrated into a common spatial frame of reference. If the predetermined intra encoded frame is, for example, a map or schematic representing the layout of the camera positions, it can serve as a unified visual backdrop onto which object data from all cameras is composited in a geospatial context. This may facilitate a global situational overview for the human operator viewing the condensed video. It may also allow for cross-camera tracking of objects, or correlation of events between the plurality of video streams.

In some examples, identifying the first set of one or more encoding blocks comprises, for each encoding block within the first region of the encoded image frame associated with the first region, identifying the encoding block upon one of: the encoding block being an intra encoded encoding block, and the encoding block being encoded with reference to an encoding block in the encoded video sequence being included in the intra encoded frame of the condensed video.

In this context, an intra encoded encoding block, commonly referred to as an I-block, is a block that is encoded using only information from within the same frame, without referencing any other frames in the video sequence. I-blocks are self-contained and can thus be decoded independently, making it possible for direct reuse in the condensed video.

By contrast, a predictively encoded block, commonly referred to as a P-block, is encoded using inter prediction, which means it depends on a reference block in a previous frame in the encoded video sequence. Similarly, a B-block is bidirectionally predicted, meaning it depends on reference blocks from both a previous and a future frame in the encoded video sequence. To ensure correct decoding in the condensed video, the method requires that, for the first inter encoded frame (P-frame or B-frame), all reference block used for prediction must be present in the intra encoded frame(s) of the condensed video. In the case of P-blocks, this typically means that the intra encoded frame used in the condensed video should correspond to the frame in the encoded video sequence that immediately precedes the encoded image frame from which the P-block is sourced. For B-blocks, which have both backward and forward dependencies, additional reference frames may be needed, namely, those before and after the B-frame in the original sequence, to satisfy the decoding requirements.

Importantly, if an encoding block does not meet either of these two preconditions, i.e., it is neither intra encoded nor predictively encoded with reference to a block already present in the intra frame of the condensed video, it will not be copied into the condensed video, even if it lies within a region of interest (ROI) as defined by the metadata. The inventors have realized, however, that the resulting condensed video typically appears visually acceptable even when certain blocks within an ROI are omitted. This insight allows the techniques for generating a condensed video to avoid unnecessary processing (i.e., avoiding pixel-domain operations) while still achieving a semantically meaningful condensed video.

In some examples, identifying the second set of one or more encoding blocks comprises, for each encoding block within the second region of the encoded image frame associated with the second region, identifying the encoding block upon one of: the encoding block being an intra encoded encoding block (I-block), and the inter encoded encoding block (P-block) being encoded with reference to an encoding block in the encoded video sequence being included in the first set of one or more encoding blocks.

This example is conceptually similar to the identification of encoding blocks for the first P-frame (the first inter encoded frame) in the condensed video, where blocks are selected based on their ability to be decoded either independently (as I-blocks) or with reference to data already present in a previously defined frame. However, in this case, the method checks whether the reference block for a given P-block is already part of the first set of encoding blocks, i.e., whether it has already been copied into the first inter encoded frame of the condensed video.

In some examples, determining the first inter encoded frame of the condensed video comprises: for a third region in a second series of regions, identifying a third set of one or more encoding blocks from the encoded image frame associated with the third region, wherein each identified encoding block in the third set is located within the third region and can be decoded using the intra encoded frame or can be decoded without referencing any other coding blocks, and copying the identified third set of encoding blocks from the encoded image frame associated with the third region into the first inter encoded frame.

In these examples, determining the second inter encoded frame of the condensed video comprises: for a fourth region subsequent to the third region in the second series of regions, identifying a fourth set of one or more encoding blocks from the encoded image frame associated with the fourth region, wherein each identified encoding block in the fourth set is located within the fourth region and that can be decoded using third set of encoding blocks or can be decoded without referencing any other coding blocks, and copying the identified fourth set of encoding blocks from the encoded image frame associated with the fourth region into the second inter encoded frame.

It should be noted that the terms "first," "second," "third," and so on, as used herein in relation to regions, frames, sets of encoding blocks, etc., are employed solely for the purpose of clear textual identification and differentiation within the description. These terms do not imply any particular order, priority, or temporal sequence unless explicitly stated otherwise.

This example allows an inter encoded frame in the condensed video to include multiple objects (i.e., from a first and second series of regions). By selectively copying encoding blocks associated with different object tracks, based on their decodability and positioning, into the same inter frame, the method enables a temporal condensation of events.

In some examples, the encoded image frame associated with the first region and the encoded image frame associated with the third region are different encoded image frames within the encoded video stream.

This example allows an inter encoded frame in the condensed video to include multiple objects that were not originally visible in the same frame of the source video. As a result, the condensed video may provide a concise visual summary where simultaneous presentation of temporally separate events (objects) may facilitate a rapid review.

In some examples, any encoding blocks in the first and second inter encoded frame of the condensed video not being copied from an encoded image frame of the encoded video stream is set to one of: a skip block; and an inter encoding block with a zero residual.

Functionally, both approaches result in the any non-copied block in the P-frames in the condense video are being reconstructed (i.e., when decoded) from the reference frame without modification, and in this context, the reference frame is the intra encoded frame used in the condensed video. Consequently, any portions of the inter encoded frame that do not contain object content will simply show the content of the I-frame.

In some examples, the metadata comprises a plurality of object detection metadata instances, wherein each object detection metadata instance corresponds to a detected object and comprises one or more of: a bounding box of the detected object; a segmentation mask of the detected object; and a position and a size of the detected object.

In some examples, the method further comprises encoding a video sequence into the encoded video sequence, wherein the encoding comprises: obtaining object tracking data indicating an image frame of the video sequence and an encoding region in the image frame in which a tracked object is first detected; and encoding all encoding blocks within the encoding region of the image as intra encoding blocks.

Advantageously, this example facilities that the initial appearance of a newly detected object in the video is encoded in a self-contained manner, i.e., without reference to any other frame. As a result, when constructing the condensed video, this first instance of the object is guaranteed to be decodable independently. This increases the likelihood that new object tracks are represented in the condensed video, enhancing the completeness and informativeness of the condensed video.

According to a second aspect of the disclosure, the above object is achieved by a non-transitory computer-readable storage medium having stored thereon instructions for implementing the method according to the first aspect when executed on a device having processing capabilities.

According to a third aspect of the disclosure, the above object is achieved by a device for generating a condensed video, wherein the device is configured for: obtaining an encoded video sequence comprising encoded image frames; obtaining metadata associated with the encoded video sequence, the metadata indicating one or more series of regions across the encoded image frames, each region being associated with a respective encoded image frame of the encoded image frames and corresponding to a detected object in the associated encoded image, and each series corresponding to an object track of a detected object in the encoded video sequence; determining an intra encoded frame of the condensed video; determining a first inter encoded frame of the condensed video, the first inter encoded frame being encoded with reference to the intra encoded frame

The determining of the first inter encoded frame comprises: for a first region in a first series of regions, identifying a first set of one or more encoding blocks from the encoded image frame associated with the first region, wherein each identified encoding block in the first set is located within the first region and can be decoded using the intra encoded frame or can be decoded without referencing any other coding blocks, and copying the identified first set of encoding blocks from the encoded image frame associated with the first region into the first inter encoded frame.

The device is configured for determining a second inter encoded frame of the condensed video, the second inter encoded frame being encoded with reference to the first inter encoded frame, the determining comprises: for a second region subsequent to the first region in the first series of regions, identifying a second set of one or more encoding blocks from the encoded image frame associated with the second region, wherein each identified encoding block in the second set is located within the second region and that can be decoded using the first set of encoding blocks or can be decoded without referencing any other coding blocks, and copying the identified second set of encoding blocks from the encoded image frame associated with the second region into the second inter encoded frame.

The second and third aspects may generally have the same features and advantages as the first aspect. It is further noted that the disclosure relates to all possible combinations of features unless explicitly stated otherwise.

### Brief Description of the Drawings

The above, as well as additional objects, features, and advantages of the present disclosure, will be better understood through the following illustrative and non-limiting detailed description of embodiments of the present disclosure, with reference to the appended drawings, where the same reference numerals will be used for similar elements, wherein:
Figure 1 shows generation of a condensed video from an encoded video sequence according to embodiments;
Figure 2 shows techniques for identifying decodable encoding blocks from a region of interest in an encoded image frame, according to embodiments;
Figure 3 shows generation of a condensed video from a plurality of encoded video sequences according to embodiments;
Figure 4 shows a flow chart of a method of generating a condensed video, according to embodiments.

### Detailed Description

Conventional methods for generating condensed or synopsis videos typically require decoding the original video stream, processing video content in the pixel domain to generate the condensed video and re-encoding the resulting output from the processing. These steps are computationally intensive, particularly when dealing with long-duration video content or high-resolution streams and may not be suitable for time-constrained or resource-limited environments, where rapid processing or reduced computational overhead is required.

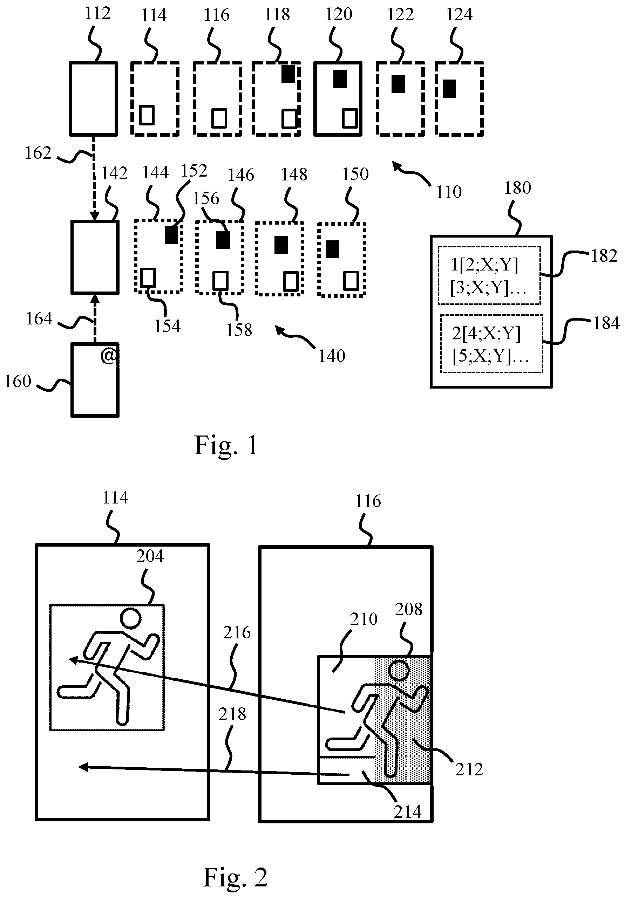

The present disclosure addresses this problem by providing a method that enables processing-efficient generation of condensed videos, wherein multiple events originally occurring at different times can be presented simultaneously. This is achieved without decoding the input video, but instead by operating directly on the encoded video data using associated metadata that identifies regions of interest and object tracks. Techniques to achieve this will now be described in conjunction with Figures 1-4.

Figure 1 illustrates a schematic overview of how a condensed video 140 can be generated from an encoded video sequence 110 comprising a series of encoded image frames 112-124. In this example, the encoded video sequence 110 includes two tracked objects, represented in Figure 1 by white rectangles for a first tracked object and black rectangles for a second tracked object. The first tracked object appears in frames 114-120, while the second tracked object appears in frames 118-124. In Figure 1, intra encoded frames (I-frames) of the encoded video sequence 110 are indicated by a solid line rectangle, i.e., image frames 112 and 120, while inter encoded frames (P-frames, B-frames) of the encoded video sequence 110 are indicated by a dashed rectangle, i.e., image frames 114, 116, 118, 122, 124. In the below, the inter encoded frames are exemplified as P-frames for ease of description.

To enable the generation of the condensed video 140, associated metadata 180 is obtained. In this illustrative example, the metadata 180 identifies two series of regions 182 and 184, each spanning multiple encoded image frames. These series correspond to the two tracked objects and are represented in Figure 1 using square brackets. Each series 182, 184 is assigned an identifier, such as "1" and "2" in Figure 1, which may correspond to a tracking ID or any other identifier that uniquely represents a tracked object. In the example of Figure 1, the first series 182 identifies the first tracked object (the white rectangles) and the second series 184 identifies the second tracked object (the black rectangles) in the encoded video sequence 110.

Each region in a series is associated with a particular encoded image frame and defines the spatial extent of the tracked object within that frame. These regions may also be referred to as regions of interest (RoIs). In Figure 1, this association is illustrated by frame numbers (1-7), and by position markers labelled 'X' and 'Y', which typically represents pixel coordinates in the respective encoded image frame where the tracked object is located. The metadata 180 may define each region using various formats (e.g., conformant with ONVIF profile M, or any other suitable standardized or proprietary metadata format), including but not limited to bounding boxes, segmentation masks, or coordinate pairs along with associated dimensions (e.g., position and size).

It should be noted that the metadata structure 180 illustrated in Figure 1 is merely one example of how such metadata 180 may be organized. Alternatively, one metadata frame per image frame may be provided. The metadata 180 may include additional information, such as object classification labels, confidence scores, timestamps, motion vectors, or real-world positioning data. Furthermore, the metadata 180 may be obtained directly from an object tracking component or may be derived from data produced by such a component.

When the condensed video 140 is generated, the first step may be to determining an intra encoded frame (I-frame) 142 of the condensed video 140. This may be done in various ways.

For example, determining the intra encoded frame 142 may comprise obtaining 162 the intra encoded frame 112 from the encoded video sequence 110 for which the metadata 182 does not indicate any region corresponding to a detected object. Selecting such an object-free frame provides a clean and unobstructed background, which helps preserve spatial coherence in the condensed video 140 as regions of interest from other time points are composited onto it.

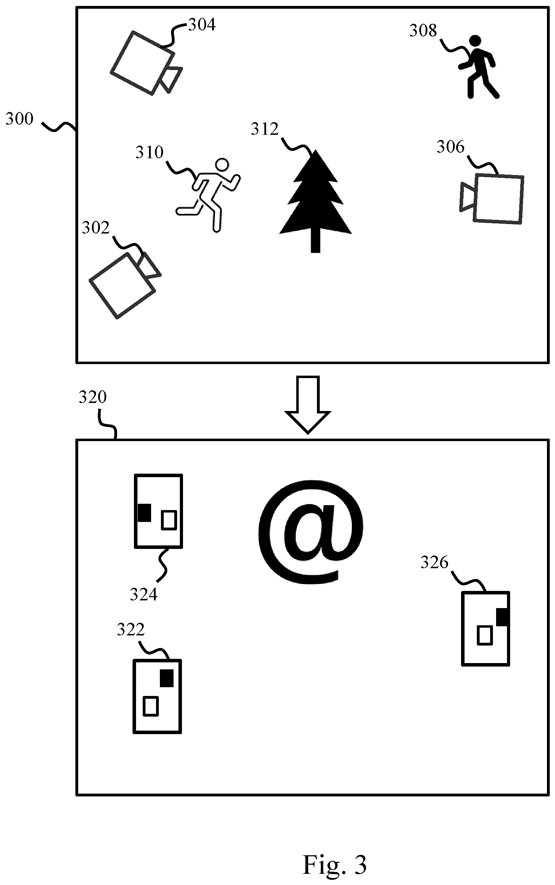

In other examples, determining the I-frame 142 comprises obtaining 164 a predetermined I-frame 160 and using this as the I-frame 142 of the condensed video 140. The predetermined I-frame 160 may, for example, comprise a label or visual overlay (represented by '@' in Figure 1) that visualizes contextual information, such as a map of camera positions (as will be further described below in conjunction with Figure 3), a floor plan, or a scene layout relevant to the monitored area. The label or visual overlay may further show company-specific information, such as a logo, camera ownership details, or application-specific context, including the site name, zone designation, or operational area (e.g., warehouse section, traffic hub, or retail department).

When the I-frame 142 has been determined, a first inter encoded frame (P-frame) 144, referencing the I-frame 142, can be determined.

This is done by, for a first region in a first series of regions 182 indicated the metadata 180, identifying a first set of one or more encoding blocks from the encoded image frame 114 associated with the first region that can be decoded, either by its own or using previously added frames in the condensed video 140 (in this case the I-frame 142).

To determine whether an encoding block can be decoded and thus safely copied into the condensed video, the method may include a preliminary decoding step, sometimes referred to as "unpack". This step is part of many standard video decoding processes (such as the syntax element decoding and dependency analysis in HEVC), but unlike full decoding, it does not involve full pixel reconstruction. Instead, unpacking involves parsing and interpreting the encoding parameters (e.g., prediction mode, reference index, motion vectors, and block partitioning) associated with each block to assess its decoding dependencies.

For example, the unpacking process allows for identification whether:
- A block is intra encoded (i.e., an I-block), and therefore self-decodable;
- A block is inter encoded (e.g., a P-block), and if so, whether its reference block is available, such as in the I-frame 142 or another previously constructed frame in the condensed video 140; and
- A block relies on prediction blocks which are unavailable (e.g., referencing encoding blocks which are not included in the condensed video 140), in which case it is excluded from copying to the condensed video as described below.

As such, for the first P-frame 144 in the example of Figure 1, any encoding blocks being identified in the first set of encoding blocks needs to be either an I-block, or a P-block referencing an encoding block which is included in the I-frame 142.

In Figure 1, the first region is associated with the first P-frame 114 of the encoded video sequence 110. If the I-frame 112, referenced by P-frame 114 in the original encoded video sequence 110, is also used as the I-frame 142 of the condensed video 140, then all encoding blocks in P-frame 114 are typically considered decodable, since any required reference data is available. However, if a predetermined I-frame 160 (or any other I-frame not corresponding to I-frame 112) is used as the I-frame 142 of the condensed video, then only those blocks in P-frame 114 that are intra encoded (I-blocks) can be safely copied into the condensed video. Any P-blocks depending on references from I-frame 112 that are not present in the condensed video 140 would be considered non-decodable in this context.

To address this, one embodiment comprises encoding a video sequence into the encoded video sequence 110 in a way that increases the decodability of newly appearing tracked objects. This is achieved by obtaining object tracking data that indicates an image frame of the video sequence and an encoding region within that frame where a tracked object is first detected and encoding all encoding blocks within that region as intra encoding blocks (I-blocks). This ensures that the first appearance of a tracked object is encoded in a self-contained manner, independent of any other frame. As a result, the region corresponding to the first appearance is more likely to be considered as decodable using the techniques herein and thus possible to add to the condensed video 140 regardless of what image data that has previously been included in the condensed video 140, thereby increasing the inclusion rate of object tracks and improving the visual completeness of the condensed video 140.

It should be noted that the custom encoding that selectively is applying intra encoding to regions in which tracked objects first appear is performed by the encoder that generates the encoded video sequence 110. Such a custom encoder is configured or adapted to utilize object tracking data during the encoding process to determine when and where to override standard inter-prediction mechanisms in favour of intra encoding.

In the example of Figure 1, the encoding blocks from the encoded image frame 114 associated with the first region are identified as decodable, and all encoding blocks which depicts the first tracked object in the encoded image frame 114 can thus be copied over to the first P-frame 144 and thus forming encoding blocks 154 of the condensed image frame. The encoding blocks 154 the first P-frame 144 are thus direct copies of the first set of one or more encoding blocks from the encoded image frame 114.

Next, a second P-frame 146, referencing the first P-frame 144, can be determined. This is done in a similar fashion as when determining the first P-frame 144. From a second region subsequent to the first region in the first series of regions 182, a second set of one or more encoding blocks from the encoded image frame 116 associated with the second region is determined. The second region is thus e.g., a bounding box of the first tracked object as depicted in the second P-frame 116 of the encoded video sequence 110.

The second set of one or more encoding blocks from the encoded image frame 116 is determined, wherein each identified encoding block in the second set is located within the second region and that can be decoded using the first set of encoding blocks (i.e., those that depicted the first tracked object and were copied over from to the first P-frame 144 of the condensed video) or can be decoded without referencing any other encoding blocks. This process is shown in more detail in Figure 2.

Figure 2 shows cutouts from two P-frames, 114 and 116, from the encoded video sequence illustrated in Figure 1, both of which include the first tracked object. The first region 204 (i.e., the bounding box of the tracked object in P-frame 114) and the second region 208 (i.e., the bounding box of the tracked object in P-frame 116) are also shown. The encoding blocks within the second region 208 are categorized into three subsets: 210, 212, and 214. One subset 212, depicted in grey in Figure 2, consists of blocks that are intra encoded (I-blocks). A second subset 210 includes inter encoded blocks (P-blocks) that reference blocks located within the first region 204. A third subset 214 contains P-blocks that reference blocks outside the first region 204.

Assuming that all encoding blocks of the first region 204 have been included in the first P-frame 144 of the condensed video 140 (i.e., forming part of the reused encoded block set 154 in Figure 1), the second set of encoding block, used to construct the second P-frame 146 in the condensed video (shown as encoded blocks 158 in figure 1), is determined as follows:
- The encoding blocks in subset 212 are intra encoded (I-blocks), meaning they are self-decodable and can therefore be safely reused in the condensed video 140;
- The encoding blocks in subset 210 are inter encoded (P-blocks) whose reference blocks (indicated by the arrow 216 in Figure 2) are available in the first P-frame 144 of the condensed video 140, and can thus also be reused (i.e., copied into the condensed video);
- The encoding blocks in subset 214 are inter encoded (P-blocks) that depend on reference blocks not present (indicated by the arrow 218 in Figure 2) in the condensed video and therefore cannot be reused (i.e., not copied into the condensed video).

Returning to Figure 1. A benefit of generating a condensed video, as discussed above, is that multiple events originally occurring at different times in the encoded video sequence 110 can be presented simultaneously in the condensed video 140. In Figure 1, this is illustrated by the fact that the encoded image blocks corresponding to the second tracked object (depicted with a black rectangle in Figure 1) are also evaluated for decodability and, when deemed decodable, are copied into the condensed video 140 in a similar manner as described above for the first tracked object (the white rectangles). The second tracked object is thus indicated in the metadata 180 in the second series of regions 184. For the first region of the second series of regions (referred herein as the third region), a third set of one or more encoding blocks from the encoded image frame 118 associated with the third region are identified, wherein each identified encoding block in the third set is located within the third region and can be decoded using the intra encoded frame 142 (i.e. P block referring to encoding blocks in the I-frame 142 of the condensed video 140) or can be decoded without referencing any other coding blocks (i.e. an I-blocks), The identified third set of encoding blocks is then copied from the encoded image frame 118 associated with the third region into the first P-frame 144 as reused encoding blocks 152.

As exemplified in Figure 1, the encoded image frame 114 associated with the first region and the encoded image frame 118 associated with the third region may be different encoded image frames within the encoded video stream 110, thus facilitating that multiple events originally occurring at different times in the encoded video sequence 110 can be presented simultaneously in the condensed video 140.

The same process is then conducted on the second region of the second series of regions (referred herein as the fourth region) 184 and all decodable encoding blocks from this region are copied from the encoded image frame 120 associated with the fourth region into the second P-frame 146 as reused encoding blocks 156.

The above techniques may then be conducted for the remaining regions of the first and second series of regions 182, 184 of the metadata 180, and the reused encoding blocks from the associated encoded image frames are forming the third and fourth P-frame 148, 150 of the condensed video 140.

In the examples described above, the spatial position of each copied (reused) encoding block within the condensed video 140 is maintained to correspond to the spatial position the block occupied in its associated encoded image frame (i.e., the encoded image frame it was copied from). For example, copying the first set of encoding blocks 154 into the first encoded image frame (i.e., the first P-frame 144) comprises placing each encoding block of the first set at a spatial position in the first P-frame 144 that corresponds to the spatial position of the encoding block in the original encoded image frame 114 associated with the first region. In figure 1, the same strategy is used for all reused encoding blocks copied to from the encoded video sequence 110 to the condensed video 140.

The remaining coding blocks of the P-frames 144-150 of the condensed video (i.e., the encoding blocks not being copied from an encoded image frame 112-124 of the encoded video stream 110) may advantageously be set to one of a skip block; and a P-block with a zero residual. It should be noted that the term skip block may be referred to differently in various video coding formats, for example, it may be referred to as an empty block or have other format-specific definitions indicating the absence of residual data.

As illustrated in Figure 1, the condensed video 140 is produced directly in an encoded format, without the need to first decode the encoded video stream 110 and then re-encode a condensed version constructed in the pixel domain. Instead, the techniques described herein operates directly on the encoded data, selectively reusing decodable encoding blocks from the original encoded video stream 110 to assemble the condensed video 140. This approach avoids the computational overhead of full decoding and re-encoding, resulting in a more efficient and lightweight process for generating condensed video representations.

In some examples, the metadata 180 further comprises, for each region, position data indicating a real-world position (such as a GPS position) of the detected object in the associated encoded image frame. In these examples, the spatial position of the reused coding blocks 152, 154, 156, 158 within the condensed video frames 142-150 may be determined not only based on their original pixel coordinates in the source frames 114-124 as explained above and visualized in Figure 1, but also based on the real-world position of the objects indicated in the metadata.

This enables for compensation for camera movement during recording of the encoded video stream 110, such as when a pan-tilt-zoom (PTZ) camera or a mobile platform is used. Instead of placing copied blocks strictly according to the shifting camera views, the copied blocks can be positioned in the condensed video 140 to reflect a stable, real-world spatial reference. As a result, even if the field of view in the original encoded video sequence 110 changes over time, the condensed video 140 may maintain a coherent spatial position of tracked objects.

In some implementations, two alternative approaches for determining block positions for video from a moving PTZ camera may be considered. One option is to use the real-world position from geo metadata, which requires compensating for camera movement of a PTZ camera in order to project the object's real-world position back into the image coordinate system. Alternatively, the position information from the metadata may directly indicate the image coordinates of the detected object. Since image classification is typically performed in the image coordinate domain, this approach eliminates the need for back-projecting from world coordinates. The real-world position metadata may still be used at a later stage, e.g., for placing the copied blocks at their appropriate real-world-based positions during composition of the condensed video.

Furthermore, if the I-frame 142 selected for the condensed video 140 represents a background view from a particular viewpoint (e.g., a specific orientation or position of the camera), this embodiment still allows copied blocks representing tracked objects to be pasted at natural and meaningful locations within that background, even if the camera has moved since the I-frame was captured. This facilitates that the visual presentation remains intuitive and that the objects appear in correct spatial relation to the static scene background in the condensed video 140.

In another example, the use of real-world position data also enables for determining a condensed video from a plurality of video sequences captured from multiple cameras. In such cases, objects tracked by different cameras can be placed within a common spatial reference in the condensed video, based on their real-world positions rather than their position relative to each individual camera view. This allows the condensed video to combine object data from different sources into a single, coherent layout. This embodiment will be further described in conjunction with Figure 3.

Figure 3 illustrates, by way of example, a scene 300 being captured from different viewpoints by three cameras 302, 304, 306. The scene includes two tracked objects 308, 310, as well as a static background element represented by a tree 312. Each camera 302, 304, 306 captures a respective encoded video sequence of the scene from its particular viewpoint. Using the techniques described above, the three encoded video sequences can then be summarized into a single condensed video sequence.

For ease of explanation, Figure 3 shows a decoded frame 320 extracted from such a condensed video. However, it should be understood that the condensed video is generated directly from the plurality of encoded video sequences using the previously described techniques, without full decoding and re-encoding. In this case, the generation of the condensed video further takes into account that each camera 302, 304, 306 is associated with a specific real-world position, and that the position data for each region, as defined in the metadata associated with each encoded video sequence, is relative to the real-world position of the corresponding camera 302, 304, 306. This allows objects captured by different cameras camera 302, 304, 306 to be placed consistently within a common spatial reference in the condensed video, preserving the real-world layout of the scene.

In this example, the background of the encoded condensed video is a predetermined I-frame, represented by the '@' character in Figure 3. The predetermined I-frame may, for instance, comprise a map, such as a floorplan of a building, a site layout, or a schematic overview of the monitored environment. By using a predetermined I-frame that reflects the real-world environment, the condensed video can accurately place objects from different cameras onto a consistent and meaningful background, even though the source videos originate from separate viewpoints. For example, each object captured by a camera can be pasted at a location in the condensed video corresponding to the position of the camera which captured the tracked object within the floorplan or map. This is schematically shown in Figure 3.

In the decoded image frame 320, three areas 322, 324, 326 are pasted onto the static background. In the encoded condensed video, this can be achieved by determining P-frames as discussed above, in which encoding blocks that are determined to be decodable according to the techniques described herein are copied into the P-frames. Each set of encoding blocks copied from a region (e.g. bounding box of a tracked object) in the source videos are placed at a spatial position in the P-frame determined from a spatial position of the encoding block in the encoded image associated with the region and from the position data of the region.

The copied areas 322, 324, and 326 from the respective encoded video sequences are, as shown in Figure 3, placed at positions corresponding to the real-world locations of the respective cameras 302, 304, and 306 within the scene 300. Specifically, the copied area 322 represents a condensed version of the encoded video sequence captured by the lower left camera 302, the copied area 324 represents a condensed version of the encoded video sequence captured by the upper left camera 304, and the copied area 326 represents a condensed version of the encoded video sequence captured by the right camera 306. Here, the terms "lower left," "upper left," and "right" refer to the physical positions of the cameras within the scene 300, reflecting their viewpoints relative to the overall layout of the environment.

The tracked objects are schematically illustrated at positions that correspond to the locations of the actual tracked objects 310, 308 as captured by each respective camera. In Figure 3, the black rectangles represent the tracked object 308, located in the right part of the scene 300, while the white rectangles represent the tracked object 310, located in the left part of the scene. As visualized, each area 322, 324, and 326 shows a condensed version of the respective encoded video sequence, with tracked objects placed according to their appearance relative to the camera position. For example, the position of the black rectangle within area 326 is intended to represent the tracked object 308 at the time it first enters the field of view of the right camera 306. Notably, this event occurs at a later time point compared to when the tracked object 310 first enters the corresponding viewpoint. Thus, the condensed video may integrate both spatial and temporal information from multiple video streams into a coherent and meaningful visualization. The different cameras 302, 304, 306 may of course capture different tracked objects as well, which are represented in the condensed video using the techniques described herein.

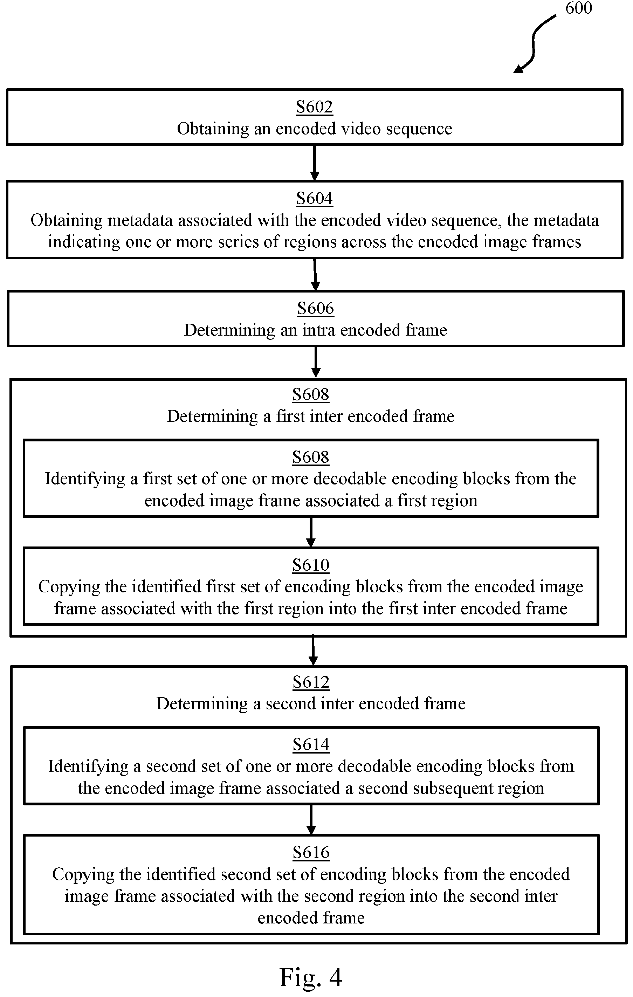

Figure 4 illustrates an example process 600 for generating a condensed video from an encoded video sequence. The process 600 may be implemented as a standalone routine or as part of a larger video analytics or encoding system. In some implementations, the process 600 is carried out by instructions executable by one or more processors, which may be embedded within a single device or distributed across multiple devices within a system. The instructions for performing the process may be stored on one or more non-transitory computer-readable media.

Suitable processors for executing the instructions include, by way of example, general-purpose or special-purpose microprocessors, and may be implemented as single-core or multi-core processors, depending on the architecture of the device or system. The processors may operate individually or cooperatively to execute the method steps described in Figure 6. In some embodiments, the processors may be augmented by, or fully implemented within application-specific integrated circuits (ASICs), digital signal processors (DSPs), field-programmable gate arrays (FPGAs), or other dedicated hardware accelerators optimized for high-efficiency video and metadata processing.

The process 600 comprises obtaining S602, an encoded video sequence comprising encoded image frames.

The process 600 further comprises obtaining S604 metadata associated with the encoded video sequence, the metadata indicating one or more series of regions across the encoded image frames, each region being associated with a respective encoded image frame of the encoded image frames and corresponding to a detected object in the associated encoded image, and each series corresponding to an object track of a detected object in the encoded video sequence.

The process 600 further comprises determining S606 an intra encoded frame of the condensed video.

The process 600 further comprises determining S606 a first inter encoded of the condensed video, the first inter encoded frame being encoded with reference to the intra encoded frame.

In the process 600, the determining step S606 comprises for a first region in a first series of regions, identifying S608 a first set of one or more encoding blocks from the encoded image frame associated with the first region, wherein each identified encoding block in the first set is located within the first region and can be using the intra encoded frame or can be decoded without referencing any other encoding blocks, and copying S610 the identified first set of encoding blocks from the encoded image frame associated with the first region into the first inter encoded frame.

The process 600 further comprises determining S612 a second inter encoded frame of the condensed video, the second inter encoded frame being encoded with reference to the first inter encoded frame.

In the process 600, the determining step S612 comprises, for a second region subsequent to the first region in the first series of regions, identifying S614 a second set of one or more encoding blocks from the encoded image frame associated with the second region, wherein each identified encoding block in the second set is located within the second region and that can be decoded using the first set of encoding blocks or can be decoded without referencing any other encoding blocks, and copying S616 the identified second set of encoding blocks from the encoded image frame associated with the second region into the second inter encoded frame.

The above embodiments are to be understood as illustrative examples of the disclosure. Further embodiments of the disclosure are envisaged. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the disclosure, which is defined in the accompanying claims.

## Claims

1. A method (600) of generating a condensed video (140), the method comprising:
obtaining (S602) an encoded video sequence (110) comprising encoded image frames (112-124);
obtaining (S604) metadata (180) associated with the encoded video sequence, the metadata indicating one or more series (182, 184) of regions across the encoded image frames, each region being associated with a respective encoded image frame of the encoded image frames and corresponding to a detected object in the associated encoded image, and each series corresponding to an object track of a detected object in the encoded video sequence;
determining (S606) an intra encoded frame (142) of the condensed video;
determining (S608) a first inter encoded frame (144) of the condensed video, the first inter encoded frame being encoded with reference to the intra encoded frame, the determining comprises:
for a first region (204) in a first series of regions (182), identifying (S608) a first set of one or more encoding blocks (154) from the encoded image frame (114) associated with the first region, wherein each identified encoding block in the first set is located within the first region and can be decoded using the intra encoded frame or can be decoded without referencing any other encoding blocks, and
copying (S610) the identified first set of encoding blocks from the encoded image frame associated with the first region into the first inter encoded frame;
determining (S612) a second inter encoded frame (146) of the condensed video, the second inter encoded frame being encoded with reference to the first inter encoded frame, the determining comprises:
for a second region (206) subsequent to the first region in the first series of regions, identifying (S614) a second set of one or more encoding blocks (156) from the encoded image frame (116) associated with the second region, wherein each identified encoding block in the second set is located within the second region and that can be decoded using the first set of encoding blocks or can be decoded without referencing any other encoding blocks, and
copying (S616) the identified second set of encoding blocks from the encoded image frame associated with the second region into the second inter encoded frame.

2. The method of claim 1, wherein determining an intra encoded frame comprises obtaining (162) an intra encoded frame (112) from the encoded video sequence for which the metadata does not indicate any region corresponding to a detected object.

3. The method of claim 1, wherein determining an intra encoded frame comprises obtaining (164) a predetermined intra encoded frame (160) as the intra encoded frame.

4. The method of any one of claims 1-3,
wherein copying the first set of encoding blocks into the first encoded image frame comprises placing each encoding block of the first set of encoding blocks at a spatial position in the first inter encoded frame corresponding to a spatial position of the encoding block in the encoded image associated with the first region; and
wherein copying the second set of encoding blocks into the second encoded image frame comprises placing each encoding block of the second set of encoding blocks at a spatial position in the second inter encoded frame corresponding to a spatial position of the encoding block in the encoded image associated with the second region.

5. The method of any one of claims 1-4,
wherein the metadata further comprises, for each region, position data indicating a real world position of the detected object in the associated encoded image;
wherein copying the first set of encoding blocks into the first encoded image frame comprises placing each encoding block of the first set of encoding blocks at a spatial position in the first inter encoded frame determined from a spatial position of the encoding block in the encoded image associated with the first region and from the position data of the first region; and
wherein copying the second set of encoding blocks into the second encoded image frame comprises placing each encoding block of the second set of encoding blocks at a spatial position in the second inter encoded frame determined from a spatial position of the encoding block in the encoded image associated with the second region and from the position data of the first region.

6. The method of claim 5, wherein the steps of the method are performed for a plurality of encoded video sequences, each encoded video sequence obtained from a respective camera (302, 304, 306), wherein each camera is associated with a real world position, wherein the position data of each region as defined in the metadata associated with each encoded video sequences is relative to the real world position of the camera from which the encoded video sequence is obtained.

7. The method of any one of claims 1-6, wherein identifying the first set of one or more encoding blocks comprises, for each encoding block within the first region of the encoded image frame associated with the first region, identifying the encoding block upon one of:
the encoding block being an intra encoded encoding block (I-block), and
the encoding block (P-block) being encoded with reference to an encoding block in the encoded video sequence being included in the intra encoded frame (I-frame) of the condensed video.

8. The method of any one of claims 1-7, wherein identifying the second set of one or more encoding blocks comprises, for each encoding block within the second region of the encoded image frame associated with the second region, identifying the encoding block upon one of:
the encoding block being an intra encoded encoding block, and
the encoding block being encoded with reference to an encoding block in the encoded video sequence being included in the first set of one or more encoding blocks.

9. The method of any one of claims 1-8,
wherein determining the first inter encoded frame of the condensed video comprises:
for a third region in a second series of regions, identifying a third set of one or more encoding blocks (152) from the encoded image frame (118) associated with the third region, wherein each identified encoding block in the third set is located within the third region and can be decoded using the intra encoded frame or can be decoded without referencing any other coding blocks, and
copying the identified third set of encoding blocks from the encoded image frame associated with the third region into the first inter encoded frame;
wherein determining the second inter encoded frame of the condensed video comprises:
for a fourth region subsequent to the third region in the second series of regions, identifying a fourth set of one or more encoding blocks (156) from the encoded image frame (120) associated with the fourth region, wherein each identified encoding block in the fourth set is located within the fourth region and that can be decoded using third set of encoding blocks or can be decoded without referencing any other coding blocks, and
copying the identified fourth set of encoding blocks from the encoded image frame associated with the fourth region into the second inter encoded frame.

10. The method of claim 9, wherein the encoded image frame associated with the first region and the encoded image frame associated with the third region are different encoded image frames within the encoded video stream.

11. The method of any one of claims 1-10, wherein any encoding blocks in the first and second inter encoded frame of the condensed video not being copied from an encoded image frame of the encoded video stream is set to one of:
a skip block; and
an inter encoding block with a zero residual.

12. The method of any one of claims 1-11, wherein the metadata comprises a plurality of object detection metadata instances, wherein each object detection metadata instance corresponds to a detected object and comprises one or more of:
a bounding box of the detected object;
a segmentation mask of the detected object; and
a position and a size of the detected object.

13. The method of any one of claims 1-12, further comprising:
encoding a video sequence into the encoded video sequence, wherein the encoding comprises:
obtaining object tracking data indicating an image frame of the video sequence and an encoding region in the image frame in which a tracked object is first detected; and
encoding all encoding blocks within the encoding region of the image as intra encoding blocks.

14. A non-transitory computer-readable storage medium having stored thereon instructions for implementing the method according to any one of claims 1-13 when executed on a device having processing capabilities.

15. A device for generating a condensed video (140), wherein the device is configured for:
obtaining (S602) an encoded video sequence (110) comprising encoded image frames (112-124);
obtaining (S604) metadata (180) associated with the encoded video sequence, the metadata indicating one or more series (182, 184) of regions across the encoded image frames, each region being associated with a respective encoded image frame of the encoded image frames and corresponding to a detected object in the associated encoded image, and each series corresponding to an object track of a detected object in the encoded video sequence;
determining (S606) an intra encoded frame (144) of the condensed video;
determining (S608) a first inter encoded frame (142) of the condensed video, the first inter encoded frame being encoded with reference to the intra encoded frame, the determining comprises:
for a first region (204) in a first series of regions (182), identifying (S608) a first set of one or more encoding blocks (154) from the encoded image frame (114) associated with the first region, wherein each identified encoding block in the first set is located within the first region and can be decoded using the intra encoded frame or can be decoded without referencing any other coding blocks, and
copying (S610) the identified first set of encoding blocks from the encoded image frame associated with the first region into the first inter encoded frame;
determining (S612) a second inter encoded frame (146) of the condensed video, the second inter encoded frame being encoded with reference to the first inter encoded frame, the determining comprises:
for a second region (206) subsequent to the first region in the first series of regions, identifying (S614) a second set of one or more encoding blocks (156) from the encoded image frame (116) associated with the second region, wherein each identified encoding block in the second set is located within the second region and that can be decoded using the first set of encoding blocks or can be decoded without referencing any other coding blocks, and
copying (S616) the identified second set of encoding blocks from the encoded image frame associated with the second region into the second inter encoded frame.

## Amended claims

### Amended claims in accordance with Rule 137(2) EPC.

1. A method (600) of generating a condensed video (140), the method comprising:
obtaining (S602) an encoded video sequence (110) comprising encoded image frames (112-124);
obtaining (S604) metadata (180) associated with the encoded video sequence, the metadata indicating one or more series of regions (182, 184) across the encoded image frames, each region being associated with a respective encoded image frame of the encoded image frames and corresponding to a detected object in the associated encoded image, and each series corresponding to an object track of a detected object in the encoded video sequence;
generating (S606) an intra encoded frame (142) of the condensed video;
generating (S608) a first inter encoded frame (144) of the condensed video, the first inter encoded frame being encoded with reference to the intra encoded frame, the generating comprises:
for a first region (204) in a first series of regions (182), identifying (S608) a first set of one or more encoding blocks (154) from the encoded image frame (114) associated with the first region, wherein the identifying comprises determining that each encoding block in the first set is located within the first region and can be decoded using the intra encoded frame or can be decoded without referencing any other encoding blocks,
copying (S610) the identified first set of encoding blocks from the encoded image frame associated with the first region into the first inter encoded frame,
for a third region in a second series of regions (184), identifying a third set of one or more encoding blocks (152) from the encoded image frame (118) associated with the third region, wherein the identifying comprises determining that each encoding block in the third set is located within the third region and can be decoded using the intra encoded frame or can be decoded without referencing any other coding blocks, and
copying the identified third set of encoding blocks from the encoded image frame associated with the third region into the first inter encoded frame;
generating (S612) a second inter encoded frame (146) of the condensed video, the second inter encoded frame being encoded with reference to the first inter encoded frame, the generating comprises:
for a second region (208) subsequent to the first region in the first series of regions, identifying (S614) a second set of one or more encoding blocks (158) from the encoded image frame (116) associated with the second region, wherein the identifying comprises determining that each encoding block in the second set is located within the second region and can be decoded using the first set of encoding blocks or can be decoded without referencing any other encoding blocks,
copying (S616) the identified second set of encoding blocks from the encoded image frame associated with the second region into the second inter encoded frame,
for a fourth region subsequent to the third region in the second series of regions, identifying a fourth set of one or more encoding blocks (156) from the encoded image frame (120) associated with the fourth region, wherein the identifying comprises determining that each encoding block in the fourth set is located within the fourth region and can be decoded using third set of encoding blocks or can be decoded without referencing any other coding blocks, and
copying the identified fourth set of encoding blocks from the encoded image frame associated with the fourth region into the second inter encoded frame;
wherein the encoded image frame associated with the first region and the encoded image frame associated with the third region are different encoded image frames within the encoded video stream.

2. The method of claim 1, wherein generating an intra encoded frame comprises obtaining (162) an intra encoded frame (112) from the encoded video sequence for which the metadata does not indicate any region corresponding to a detected object.

3. The method of claim 1, wherein generating an intra encoded frame comprises obtaining (164) a predetermined intra encoded frame (160) as the intra encoded frame.

4. The method of any one of claims 1-3,
wherein copying the first set of encoding blocks into the first encoded image frame comprises placing each encoding block of the first set of encoding blocks at a spatial position in the first inter encoded frame corresponding to a spatial position of the encoding block in the encoded image associated with the first region; and
wherein copying the second set of encoding blocks into the second encoded image frame comprises placing each encoding block of the second set of encoding blocks at a spatial position in the second inter encoded frame corresponding to a spatial position of the encoding block in the encoded image associated with the second region.

5. The method of any one of claims 1-4,
wherein the metadata further comprises, for each region, position data indicating a real world position of the detected object in the associated encoded image;
wherein copying the first set of encoding blocks into the first encoded image frame comprises placing each encoding block of the first set of encoding blocks at a spatial position in the first inter encoded frame determined from a spatial position of the encoding block in the encoded image associated with the first region and from the position data of the first region; and
wherein copying the second set of encoding blocks into the second encoded image frame comprises placing each encoding block of the second set of encoding blocks at a spatial position in the second inter encoded frame determined from a spatial position of the encoding block in the encoded image associated with the second region and from the position data of the first region.

6. The method of claim 5, wherein the steps of the method are performed for a plurality of encoded video sequences, each encoded video sequence obtained from a respective camera (302, 304, 306), wherein each camera is associated with a real world position, wherein the position data of each region as defined in the metadata associated with each encoded video sequences is relative to the real world position of the camera from which the encoded video sequence is obtained.

7. The method of any one of claims 1-6, wherein identifying the first set of one or more encoding blocks comprises, for each encoding block within the first region of the encoded image frame associated with the first region, identifying the encoding block upon one of:
the encoding block being an intra encoded encoding block (I-block), and
the encoding block (P-block) being encoded with reference to an encoding block in the encoded video sequence being included in the intra encoded frame (I-frame) of the condensed video.

8. The method of any one of claims 1-7, wherein identifying the second set of one or more encoding blocks comprises, for each encoding block within the second region of the encoded image frame associated with the second region, identifying the encoding block upon one of:
the encoding block being an intra encoded encoding block, and
the encoding block being encoded with reference to an encoding block in the encoded video sequence being included in the first set of one or more encoding blocks.

9. The method of any one of claims 1-8, wherein any encoding blocks in the first and second inter encoded frame of the condensed video not being copied from an encoded image frame of the encoded video stream is set to one of:
a skip block; and
an inter encoding block with a zero residual.

10. The method of any one of claims 1-9, wherein the metadata comprises a plurality of object detection metadata instances, wherein each object detection metadata instance corresponds to a detected object and comprises one or more of:
a bounding box of the detected object;
a segmentation mask of the detected object; and
a position and a size of the detected object.

11. The method of any one of claims 1-10, further comprising:
encoding a video sequence into the encoded video sequence, wherein the encoding comprises:
obtaining object tracking data indicating an image frame of the video sequence and an encoding region in the image frame in which a tracked object is first detected; and
encoding all encoding blocks within the encoding region of the image as intra encoding blocks.

12. A non-transitory computer-readable storage medium having stored thereon instructions for implementing the method according to any one of claims 1-13 when executed on a device having processing capabilities.

13. A device for generating a condensed video (140), wherein the device is configured for:
obtaining (S602) an encoded video sequence (110) comprising encoded image frames (112-124);
obtaining (S604) metadata (180) associated with the encoded video sequence, the metadata indicating one or more series of regions (182, 184) across the encoded image frames, each region being associated with a respective encoded image frame of the encoded image frames and corresponding to a detected object in the associated encoded image, and each series corresponding to an object track of a detected object in the encoded video sequence;
generating (S606) an intra encoded frame (144) of the condensed video;
generating (S608) a first inter encoded frame (142) of the condensed video, the first inter encoded frame being encoded with reference to the intra encoded frame, the generating comprises:
for a first region (204) in a first series of regions (182), identifying (S608) a first set of one or more encoding blocks (154) from the encoded image frame (114) associated with the first region, wherein the identifying comprises determining that each encoding block in the first set is located within the first region and can be decoded using the intra encoded frame or can be decoded without referencing any other coding blocks,
copying (S610) the identified first set of encoding blocks from the encoded image frame associated with the first region into the first inter encoded frame,
for a third region in a second series of regions (184), identifying a third set of one or more encoding blocks (152) from the encoded image frame (118) associated with the third region, wherein the identifying comprises determining that each encoding block in the third set is located within the third region and can be decoded using the intra encoded frame or can be decoded without referencing any other coding blocks, and
copying the identified third set of encoding blocks from the encoded image frame associated with the third region into the first inter encoded frame;
generating (S612) a second inter encoded frame (146) of the condensed video, the second inter encoded frame being encoded with reference to the first inter encoded frame, the generating comprises:
for a second region (208) subsequent to the first region in the first series of regions, identifying (S614) a second set of one or more encoding blocks (158) from the encoded image frame (116) associated with the second region, wherein the identifying comprises determining that each encoding block in the second set is located within the second region and can be decoded using the first set of encoding blocks or can be decoded without referencing any other coding blocks,
copying (S616) the identified second set of encoding blocks from the encoded image frame associated with the second region into the second inter encoded frame,
for a fourth region subsequent to the third region in the second series of regions, identifying a fourth set of one or more encoding blocks (156) from the encoded image frame (120) associated with the fourth region, wherein the identifying comprises determining that each encoding block in the fourth set is located within the fourth region and can be decoded using third set of encoding blocks or can be decoded without referencing any other coding blocks, and
copying the identified fourth set of encoding blocks from the encoded image frame associated with the fourth region into the second inter encoded frame;
wherein the encoded image frame associated with the first region and the encoded image frame associated with the third region are different encoded image frames within the encoded video stream.
